# EUROPÄISCHE PATENTSCHRIFT

(11) **EP 1 036 376 B1**
(45) Veröffentlichungstag und Bekanntmachung des Hinweises auf die Patenterteilung: **04.09.2002**
(21) Anmeldenummer: 99931065.9
(22) Anmeldetag: 14.06.1999
(51) Int. Cl.: G07C 9/00

(54) **BERÜHRUNGSLOS ARBEITENDER DATENTRÄGER**
CONTACTLESS DATA CARRIER
SUPPORT DE DONNEES FONCTIONNANT SANS CONTACT

(30) Priorität: 21.07.1998 DE 19832671
(43) Veröffentlichungstag der Anmeldung: 20.09.2000
(73) Patentinhaber: SkiData AG, 5083 Gartenau (AT)
(72) Erfinder: PONERT, Gregor, A-5020 Salzburg (AT)
(74) Vertreter: Berngruber, Otto, Dr. Dipl.-Chem.
(86) Internationale Anmeldenummer: EP9904084
(87) Internationale Veröffentlichungsnummer: WO00005686

(56) Entgegenhaltungen:
- WO-A-88/09541
- FR-A- 2 669 758
- US-A- 3 806 874
- US-A- 4 615 185
- US-A- 4 736 196
- US-A- 5 504 474

## Beschreibung

Die Erfindung bezieht sich auf einen Datenträger zur berührungslosen Kontrolle von Personen mit einer nicht übertragbaren Berechtigung zur Inanspruchnahme einer Leistung.

Gegenüber Datenträgern, die in ein Kontrollgerät gesteckt werden müssen, besitzen berührungslos arbeitende Datenträger, die über eine größere Datenübertragungsentfernung mit einer Schreib- und Leseeinrichtung im Rundfunkwellenbereich zusammenarbeiten, den Vorteil, dass sie beispielsweise in Form einer Karte an der Kleidung befestigt oder in eine Armbanduhr integriert sein können, also "handfree" einsetzbar sind. Sie werden daher beispielsweise bevorzugt an Zugangskontrolleinrichtungen von Skiliften und Seilbahnanlagen eingesetzt, die im allgemeinen eine Personenvereinzelungseinrichtung, wie ein Drehkreuz, aufweisen, die durch die Schreib- und Leseeinrichtung betätigt bzw. für eine Person entsperrt wird, wenn die Schreib- und Leseeinrichtung vom Datenträger entsprechende Daten empfängt.

Um zu verhindern, dass nicht übertragbare Datenträger doch an andere Personen weitergegeben werden, können sie mit einem Foto des Benutzers versehen werden. Das aufwendige Foto rechnet sich jedoch nur für kostspieligere Datenträger mit längerer Berechtigungsdauer, beispielsweise für einen Wochenskipass in einem Wintersportgebiet. Datenträger für Leistungen von geringerem Wert, z. B. Tageskipässe, werden damit nach wie vor mißbräuchlich an andere Personen weitergegeben. Dadurch entsteht für die Lift- und Seilbahnbetreiber ein nicht unbeachtlicher Schaden.

Aus DE 84 28 610 U1 geht ein Armband für zu überwachende Personen, wie psychisch Kranke in Anstalten hervor, das nur mit einem Spezialwerkzeug geöffnet werden kann. D.h., der Datenträger wird nicht zerstört, wenn das Armband abgenommen wird. In das Armband ist ein Magnetstreifen integriert, der ein Signal auslöst, wenn der Patient eine elektronische Schranke am Ausgang der Anstalt passiert.

Aus WO 88/09541 A ist ein Armband mit einem Speicherchip und damit verbundener Antenne bekannt, das sich beispielsweise bei Personen einsetzen lässt, die zu einem Hausarrest verurteilt worden sind. An den Speicherchip ist ein Fotoempfänger angeschlossen, der von einer Lichtquelle über eine optische Faser in dem Armband angesteuert wird. Wenn das Armband durch Herausziehen eines Endes aus dem Gehäuse geöffnet wird, wird die Lichtzufuhr zum Fotoempfänger unterbrochen und dadurch der Chip deprogrammiert.

Aus US-A-5 504 474 ist als Überwachungsvorrichtung für Straffällige ein Armband bekannt, das einen Sender mit Antenne in einem Gehäuse aufweist. Durch Verbinden der Enden des Armbandes wird der Stromkreis geschlossen. Wenn das Armband geöffnet wird, wird der Stromkreis unterbrochen und damit ein Alarm ausgelöst. Zum Öffnen des Armbandes müssen Teile von dessen Schließe zerstört werden.

Aufgabe der Erfindung ist es, einen relativ einfach aufgebauten, berührungslos arbeitenden Datenträger mit nicht übertragbarer, personenbezogener Berechtigung, beispielsweise auch für eine kurze Dauer, zur Inanspruchnahme einer oder mehrerer Leistungen, z.B. der Personenbeförderungsanlagen eines Skigebiets, bereitzustellen, mit dem eine mißbräuchliche Weitergabe an andere Personen verhindert ist.

Dies wird erfindungsgemäß mit dem im Anspruch 1 gekennzeichneten Datenträger erreicht. Erfindungsgemäß ist der berührungslos arbeitende Datenträger in ein Armband derart integriert, dass er nach öffnen des Armbandes permanent unbrauchbar ist, also zerstört wird. Der Datenträger, der mit der Schreib- und Leseeinrichtung der Zugangskontrolleinrichtung im RF-Bereich (10⁴ - 3.10⁹ Hz) zusammenarbeitet, wird damit funktionslos, sodass die Personenvereinzelungseinrichtung unbetätigt bzw. gesperrt bleibt. Damit wird eine mißbräuchliche Weitergabe des nicht übertragbaren Datenträgers an andere Personen sicher unterbunden.

Das Unbrauchbarmachen des Datenträgers kann auf verschiedene Weise erfolgen. So kann beispielsweise die Antenne und/oder der Mikrochip unbrauchbar gemacht werden, oder die Leiterplatte, falls eine solche die Antenne mit dem Mikrochip verbindet. Das Unbrauchbarmachen des Mikrochips ist insbesondere dann notwendig, falls ein Mikrochip mit integrierter Antenne verwendet wird.

Die Antenne muss auf eine bestimmte Betriebsfrequenz genau eingestellt sein. Demgemäß darf sich die Antennengeometrie nicht ändern. Vorzugsweise ist die Antenne daher in einem steifen Teil des Armbands angeordnet, insbesondere in einem Teil der Armbandschließe.

Aus den gleichen Gründen ist die Antenne mit dem Chip durch eine möglichst kurze Leitung verbunden, zum Beispiel über eine Leiterplatte.

Nachstehend ist die Erfindung anhand der Zeichnung beispielsweise näher erläutert. Darin zeigen:
- Fig. 1: eine perspektivische Ansicht der beiden Teile der Schließe eines Armbands mit weggebrochener Oberseite eines Schließteils nach einer ersten Ausführungsform;
- Fig. 2: einen Schnitt entlang der Linie II-II in Fig. 1;
- Fig. 3: eine Draufsicht auf die beiden Teile einer Schließe eines Armbands nach einer anderen Ausführungsform, ebenfalls mit weggebrochener Oberseite des einen Schließteils; und
- Fig. 4: einen Schnitt durch noch eine andere Ausführungsform der Schließe.

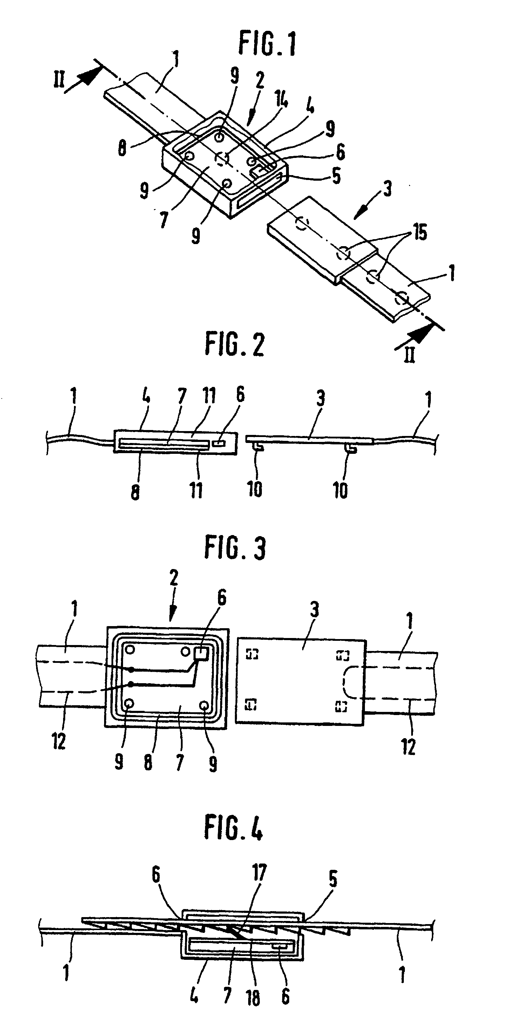

Gemäß Fig. 1 und 2 weist ein nur teilweise dargestelltes Armband 1 zwei Schließteile 2, 3 auf. Das eine Teil 2 der Schließe wird durch ein flaches Gehäuse 4 gebildet, und das andere Teil 3 durch eine Zunge.

Während sich von dem einen Ende des Gehäuses 4 das Armband 1 wegerstreckt, weist es an seinem anderen Ende einen Schlitz 5 auf, in den die Zunge 3 beim Schließen des Armband 1 gesteckt wird.

In dem Gehäuse 4 ist neben einem Hohlraum 11, der die eingesteckte Zunge 3 aufnimmt, ein Mikrochip 6 an eine Leiterplatte 7 anbondiert, an die zugleich eine Antennenspule 8 angeschlossen ist. Der Chip 6 ist in einer Ausnehmung 11 der Leiterplatte 7 angeordnet. Die Antennenspule 8 kann sich entlang dem Umfang der Leiterplatte 7 erstrecken.

In der Leiterplatte 7 sind Vertiefungen 9 vorgesehen, in die an der Zunge 3 angeformte widerhakenartige Vorsprünge 10 eingreifen, wenn die Zunge 3 in das Gehäuse 4 gesteckt worden ist. Statt dessen können auch an der Leiterplatte 9 Vorsprünge und in der Zunge 3 Vertiefungen oder in Leiterplatte 9 und Zunge 3 Vertiefungen vorgesehen sein, in die entsprechend angeordnete Vorsprünge in einer der Einsteckrichtung der Zunge 3 entgegengesetzten Richtung.

Wenn die Zunge 3 aus dem Gehäuse 4 zum Öffnen des Armbands 1 gezogen wird, wird damit die Leiterplatte 7, die Antenne 8 und/oder der Chip 6 beschädigt und damit der Datenträger unwirksam.

Die Ausführungsform nach Fig. 3 unterscheidet sich von der nach Fig. 1 und 2 im wesentlichen nur dadurch, dass sich entlang des Armbands 1 von dem einen Teil 2 zum anderen Teil der Schließe eine in das Armband 1 integrierte, gestrichelt dargestellte Leiterschleife 12 erstreckt, die über die Leiterplatte 7 an den Chip 6 angeschlossen ist.

Die Leiterschleife 12 kann z.B. über einen Ausgang des Chips 6 mit dessen Prozessor verbunden sein. Bei Durchtrennen der Leiterschleife 12 wird der Chip 6 und damit der Datenträger unwirksam.

Bei der Ausführungsform nach Fig. 3 ist der Datenträger damit auch vor einem mißbräuchlichen Durchtrennen des Armbands 1 außerhalb der Schließe 2, 3 und Weitergabe an eine andere Person, sowie ggf. Zusammenfügen des Armbandes 1 an der durchtrennten Stelle, z.B. mit einem Klebeband, geschützt.

Um das Armband 1 an den Umfang des Handgelenks der jeweiligen Person anzupassen, damit es nicht über die Hand abgestreift werden kann, kann es ferner eine nicht zu öffnende Einrichtung zum Anpassen des Armbandumfangs aufweisen, die nicht bzw. nur gewaltsam zu öffnen ist, beispielsweise einen Spreizdorn, eine Niet oder nach Art eines Kabelbinders.

Vorzugsweise ist diese Armbandumfangsanpaßeinrichtung so ausgebildet, dass sie nur durch permanentes Unbrauchbarmachen, also Zerstörung des Datenträgers geöffnet werden kann.

Beispielsweise können das Gehäuse 4 und die Leiterplatte 7, wie in Fig. 1 gestrichelt angedeutet, mit einer Bohrung 14 versehen sein, und die Zunge 3 und/oder das entsprechende Ende des Armbands 1 mit hintereinander angeordneten Öffnungen 15. Durch Einstecken der Zunge 3 bzw. des Endes des Armbandes 1 durch den Schlitz 5 und gegebenenfalls Hindurchstecken durch einen entsprechenden Schlitz am anderen Gehäuseende wird die Öffnung 15, die dem jeweiligen Armgelenkumfang entspricht, in Deckung mit der Bohrung 14 in der Platte 7 bzw. dem Gehäuse 4 gebracht und durch Einführen einer nicht dargestellten Niet das Gehäuse 4 und die Platte 7 mit der Zunge 3 bzw. dem Ende des Armbands 1 unlösbar verbunden.

Die Niet kann elektrisch leitfähig ausgebildet sein und damit einen für die Funktion das Datenträgers notwendigen, nicht dargestellten Kontakt schließen, beispielsweise eine Unterbrechung der Antenne 8 oder beispielsweise einen Kontakt zwischen der Leiterschleife 12 und einem Ausgang des Chips 6 bilden, wie im Zusammenhang mit Fig. 3 erläutert.

Stattdessen kann z.B. auch eine Niet aus zwei unlösbar miteinander verbindbaren Teilen verwendet werden, die von der einen bzw. anderen Seite in das Gehäuse 4 gesteckt werden und dabei unlösbar ineinander rasten. Auch ist es beispielsweise möglich, das Gehäuse 4 nur an einer Seite mit einer entsprechenden Bohrung zu versehen, in die ein Knopf eingeführt wird, der mit einer mit der Platte 7 verbundenen Aufnahme unlösbar verrastet.

Nach der in Fig. 4 dargestellten Variante der Armbandumfangsanpaßeinrichtung ist das eine Ende des Armbandes 1 ähnlich einem Kabelbinder mit einem sägezahnförmigen Profil 16 versehen, das mit wenigstens einem Vorsprung zusammenwirkt, der in das sägezahnförmige Profil 16 einrastet, beispielsweise einem Spreizdorn 17, der an der dem Sägezahnprofil 16 zugewandten Seite der Leiterplatte 7 angeordnet und auf das Sägezahnprofil 16 zu federbelastet ist. Der Spreizdorn 17 kann beispielsweise an einer Platte 18 vorgesehen sein, die z.B. durch Formschluß mit der Leiterplatte 7 verbunden ist. Statt mit der Leiterplatte 7 kann der Spreizdorn 17 oder sonstige Vorsprung auch mit der Antenne 8, dem Chip 6 und/oder der Leiterbahn 12 verbunden sein.

Um den Datenträger bei gewaltsamem Öffnen des Armbandes permanent unbrauchbar zu machen, kann das Armband beispielsweise auch eine Sollbruchstelle im Bereich der Leiterbahn 12 aufweisen.

Das Armband 1 mit dem erfindungsgemäßen Datenträger kann also von der das Armband 1 tragenden Person, beispielsweise einem Skifahrer selbst geöffnet und abgenommen werden. Beim Abnehmen des Armbandes 1 wird der erfindungsgemäße Datenträger jedoch permanent unbrauchbar.

## Patentansprüche

1. Datenträger mit einer nicht übertragbaren Berechtigung, der mit der Leseeinrichtung einer Zugangskontrolleinrichtung im RF-Bereich zusammenarbeitet, die eine Personenvereinzelungseinrichtung entsperrt, wobei der Datenträger einen Mikrochip (6) und eine mit dem Mikrochip (6) verbundene Antenne (8) aufweist, **dadurch gekennzeichnet, daß** der Datenträger in ein Armband (1) derart integriert ist, dass er nach dem Öffnen des Armbands (1) permanent unbrauchbar und damit funktionslos ist, sodass die Personenvereinzelungseinrichtung gesperrt bleibt.

2. Datenträger nach Anspruch 1, **dadurch gekennzeichnet, dass** die Antenne (8) in einem steifen Abschnitt des Armbands (1) angeordnet ist.

3. Datenträger nach Anspruch 2, **dadurch gekennzeichnet, dass** der Mikrochip (6) an eine Leiterplatte (7) angeschlossen ist, welche die Antenne (8) enthält.

4. Datenträger nach Anspruch 2 oder 3, **dadurch gekennzeichnet, dass** der steife Abschnitt des Armbands (1) durch einen Teil (2) der Armbandschließe gebildet wird.

5. Datenträger nach Anspruch 3 und 4, **dadurch gekennzeichnet, dass** die Leiterplatte (7) in dem einen Teil (2) der Schließe wenigstens eine Vertiefung (9) und/oder einen Vorsprung aufweist, der beim Zusammenstecken der beiden Teile (2, 3) der Schließe widerhakenartig mit wenigstens einem Vorsprung (10) bzw. einer Vertiefung des anderen Teils (3) der Schließe zusammenwirkt.

6. Datenträger nach einem vorstehenden Ansprüche, **dadurch gekennzeichnet, dass** der Chip (6) mit einer sich um das Armband (1) erstreckenden Leiterbahn (12) verbunden ist, die den Datenträger bei Beschädigung unwirksam macht.

7. Datenträger nach einem der vorstehenden Ansprüche, **dadurch gekennzeichnet, dass** eine nicht zu öffnende Einrichtung zum Anpassen des Umfangs des Armbands (1) an den Handgelenkumfang vorgesehen ist.

8. Vorrichtung nach Anspruch 7, **dadurch gekennzeichnet, dass** die Armbandumfangsanpaßeinrichtung so ausgebildet ist, dass sie nur durch permanentes Unbrauchbarmachen des Datenträgers geöffnet werden kann.

## Claims

1. A data carrier having a nontransferable entitlement and cooperating with a reading device of an access control device in the RF range which unblocks a person singling device, said data carrier having a microchip (6) and an antenna (8) connected with said microchip (6), **characterized in that** the data carrier is integrated into a bracelet (1) in such a way that after the bracelet (1) is opened the data carrier is permanently useless and thus functionless so that the person singling device remains blocked.

2. A data carrier according to claim 1, **characterized in that** the antenna (8) is disposed in a rigid portion of the bracelet (1).

3. A data carrier according to claim 2, **characterized in that** the microchip (6) is connected to a circuit board (7) containing the antenna (8).

4. A data carrier according to claim 2 or 3, **characterized in that** the rigid portion of the bracelet (1) is formed by a part (2) of the bracelet closure.

5. A data carrier according to claims 3 and 4, **characterized in that** the circuit board (7) has at least one depression (9) and/or projection in one part (2) of the closure which cooperates in barblike fashion with at least one projection (10) or depression in the other part (3) of the closure when the two parts (2, 3) of the closure are joined.

6. A data carrier according to any of the above claims, **characterized in that** the chip (6) is connected with a conductive path (12) extending around the bracelet (1) and rendering the data carrier inoperative when damaged.

7. A data carrier according to any of the above claims, **characterized in that** an unopenable device for fitting the circumference of the bracelet (1) to the wrist circumference is provided.

8. An apparatus according to claim 7, **characterized in that** the bracelet circumference fitting device is formed so as to be opened only by rendering the data carrier permanently useless.

## Revendications

1. Support de données comportant une authentification non transmissible qui coopère avec le dispositif de lecture d'un dispositif de contrôle d'accès dans la plage de fréquence radio, lequel débloque un dispositif d'individualisation de personne, le support de données présentant une puce électronique (6) et une antenne (8) reliée à la puce électronique (6), **caractérisé en ce que** le support de données est intégré dans un bracelet (1) de telle sorte qu'après avoir ouvert le bracelet, il est inutilisable en permanence et par conséquent sans fonction de sorte que le dispositif d'individualisation de personne reste bloqué.

2. Support de données selon la revendication 1, **caractérisé en ce que** l'antenne (8) est agencée sur un tronçon rigide du bracelet (1).

3. Support de données selon la revendication 2, **caractérisé en ce que** la puce électronique (6) est branchée à une plaquette à circuits imprimés (7) qui contient l'antenne (8).

4. Support de données selon la revendication 2 ou 3, **caractérisé en ce que** le tronçon rigide du bracelet (1) est formé par une partie (2) du fermoir du bracelet.

5. Support de données selon les revendications 3 et 4, **caractérisé en ce que** la plaquette à circuits imprimés (7) présente dans ladite une partie (2) du fermoir au moins un creux (9) et/ou une saillie qui, lorsqu'on emboîte l'une dans l'autre les deux parties (2, 3) du fermoir, coopère à là manière d'un ardillon avec au moins une saillie (10) ou un creux, respectivement, de l'autre partie (3) du fermoir.

6. Support de données selon l'une des revendications précédentes, **caractérisé en ce que** la puce (6) est reliée à une piste conductive (12) s'étendant autour du bracelet (1), laquelle rend le support de données inactif en cas d'endommagement.

7. Support de données selon l'une des revendications précédentes, **caractérisé en ce qu'**il est prévu un dispositif qui ne peut pas être ouvert pour adapter la taille du bracelet (1) à la taille du poignet.

8. Support de données selon la revendication 7, **caractérisé en ce que** le dispositif d'adaptation de la taille du bracelet est réalisé de telle sorte qu'il ne peut être ouvert qu'en rendant le support de données inutilisable en permanence
